# EUROPÄISCHE PATENTSCHRIFT

(11) **EP 1 325 369 B1**
(45) Veröffentlichungstag und Bekanntmachung des Hinweises auf die Patenterteilung: **02.01.2008**
(21) Anmeldenummer: 01986351.3
(22) Anmeldetag: 19.09.2001
(51) Int. Cl.: G02B 6/02, G02B 1/04

(54) **LICHTLEITER**
OPTICAL FIBRE
FIBRE OPTIQUE

(30) Priorität: 02.10.2000 DE 10048795
(43) Veröffentlichungstag der Anmeldung: 09.07.2003
(73) Patentinhaber: Bayer MaterialScience AG, 51368 Leverkusen (DE)
(72) Erfinder: EBERT, Wolfgang, 47800 Krefeld (DE); BEHRENS, Hans-Josef, 41540 Dormagen (DE); BRANDT, Heinz-Dieter, deceased (DE); FÖLLINGER, Thomas, 41539 Dormagen (DE); HAESE, Wilfried, 51519 Odenthal (DE); BRANDT, Martina, 47877 Willich (DE); BRANDT, Franziska Hanne, 47877 Willich (DE); BRANDT, Inken Margarethe, 47877 Willich (DE)
(86) Internationale Anmeldenummer: PCT/EP2001/010798
(87) Internationale Veröffentlichungsnummer: WO 2002/029458

(56) Entgegenhaltungen:
- EP-A- 0 327 807
- US-A- 4 741 597
- US-A- 5 199 098
- US-A- 5 596 669
- US-A- 5 912 381
- DATABASE WPI Section Ch, Week 199442 Derwent Publications Ltd., London, GB; Class A18, AN 1994-338311 XP002189069 & JP 06 263809 A (DSM NV), 20. September 1994 (1994-09-20)

## Beschreibung

Die vorliegende Erfindung betrifft Lichtleiter umfassend einen Kern, enthaltend Polycarbonat und eine Beschichtung aus speziellen Polyacrylaten oder Polymethacrylaten und Stabilisatoren, sowie ein Verfahren zur Herstellung der genannten Lichtleiter, die Verwendung der genannten Lichtleiter zur Übertragung optischer Signale in Transportmitteln, sowie Transportmittel enthaltend die genannten Lichtleiter.

Lichtleiter dienen zur Übertragung optischer Signale. Lichtleiter enthalten einen Kern aus optisch transparentem Material. Der Kern kann beispielsweise aus Glas oder Kunststoff bestehen. Der Kern wird auch Faser genannt. Der Kern oder die Faser kann einen beliebigen Querschnitt und Durchmesser haben. Querschnitt und Durchmesser werden in der Praxis gemäß den vorliegenden technischen Anforderungen gewählt.

Der Kern der Lichtleiter ist üblicherweise beschichtet. Die Beschichtung kann beispielsweise aus Kunststoff oder Lack bestehen. Die Beschichtung bietet einen gewissen Schutz vor mechanischen Einwirkungen auf den Kern. Die Beschichtung verbessert weiterhin die Effizienz der Übertragung optischer Signale mit dem Lichtleiter. Somit sind insbesondere die mechanischen und die optischen Eigenschaften der Beschichtung von Bedeutung.

Dieses System aus Kern und Beschichtung kann von einer Hülle oder einem Mantel umgeben sein. Diese dient beispielsweise dem Schutz vor Beschädigung und Umwelteinflüssen.

Die Übertragung des optischen Signales, bevorzugt durch sichtbares Licht, findet in Lichtleitern in erster Linie im Kern statt. Somit sind insbesondere die optischen Eigenschaften des Kerns von Bedeutung.

Lichtleiter auf Basis kunststoffbeschichteter Polycarbonat-Fasem sind bekannt aus:
(a) EP-A 0 203 327;
(b) JP-A 84/216 104;
(c) JP-A 84/216 105;
(d) JP-A 84/218 404;
(e) JP-A 86/231 510;
(f) JP-A 86/240 206;
(g) JP-A 86/245 110;
(h) JP-A 86/278 807.

In diesen Veröffentlichungen sind Lichtleiter auf Basis von Polycarbonat-Fasern beschrieben, deren Polycarbonatkem mit bestimmten, Fluor enthaltenden Polymerisaten ((a), (e), (f), (h)), mit bestimmten Mischpolymerisaten aus Methylmethacrylaten, Styrol oder Vinyltoluol und Maleinsäureanhydrid (b), mit bestimmten Mischpolymerisaten auf Methylmethacrylaten, α-Methylstyrol und Maleinsäureanhydrid (c), mit bestimmten Mischpolymerisaten aus Methylmethacrylat, α-Methylstyrol, Styrol und Maleinsäureanhydrid (d) und mit Siliconharzen, Silicon-Acrylat-Harzen, Urethan-Acrylat-Harzen, Polyamiden oder Poly-4-methylpenten-1 (g) überzogen sind.

Diese bislang für die Beschichtung von Polycarbonatfasern vorgeschlagenen Kunststoffe sind nachteilig, weil sie eine unzureichende Wärmeformbeständigkeit (b), (c), (d), eine zu geringe Reißdehnung (b), (c), (d), (g) und/oder eine unzureichende Haftung auf dem Polycarbonat aufweisen (a), (e), (f), (g), (h), für eine Anwendung im technischen Maßstab zu aufwendig herzustellen und damit zu teuer sind ((a), (e), (f), (h)), und/oder zur Bildung von Spannungsrissen im Polycarbonatkern führen (g).

Es ist bekannt, durch UV-Strahlen polymerisierbare Mischungen aus poly- und monofunktionellen Acrylaten oder Methacrylaten für die Beschichtung von als Lichtleiter zu verwendenden Glasfasern einzusetzen (siehe z.B. EP-A 0 125 710, EP-A 0145 929, EP-A 0 167 199, DE-A 3 522 980).

Diese, für die Beschichtung von Glasfasern entwickelten Gemische, sind für Polycarbonatfasern ungeeignet, da sie zur Bildung von Spannungsrissen im Polycarbonatkem führen und außerdem einen zu hohen Brechungsindex aufweisen.

EP-A 0 327 807 offenbart Lichtleiter mit einem Kern aus Polycarbonat und einer Beschichtung aus polymerisierten Acrylaten und/oder Methacrylaten.

Die bekannten Lichtleiter mit Polycarbonat-Kern haben den Nachteil, dass die Beschichtung nach thermooxidativer Schädigung eine zu geringe mechanische Beständigkeit, insbesondere eine zu geringe Reißdehnung hat.

Die erfindungsgemäße Aufgabe besteht deshalb darin, Lichtleiter bereit zu stellen, die diesen Nachteil nicht haben.

Weiterhin besteht die erfindungsgemäße Aufgabe darin, ein Verfahren zur Herstellung dieser Lichtleiter bereit zu stellen, sowie Transportmittel, enthaltend die erfindungsgemäßen Lichtleiter bereit zu stellen.

Dabei sollen die vorteilhaften Eigenschaften der Polycarbonatfasern, insbesondere die hohe Transparenz, der hohe Brechungsindex, die hohe Wärmeformbeständigkeit, die guten mechanischen Eigenschaften, wie z.B. die hohe Biegefestigkeit und die hohe Reißfestigkeit sowie das geringe Wasseraufnahmevermögen, nicht beeinträchtigt werden.

Es wurde nun gefunden, dass die erfindungsgemäßen Aufgaben gelöst werden können, wenn der Beschichtung der Lichtleiter bestimmte Stabilisatoren zugesetzt werden.

Die erfindungsgemäße Aufgabe wird gelöst durch Lichtleiter umfassend einen Kern aus Polycarbonat und eine Beschichtung enthaltend ein Polymer, das Wiederholungseinheiten enthält, abgeleitet von den Monomeren
A) eine oder mehrere verschiedene Verbindungen nach Formel (I) 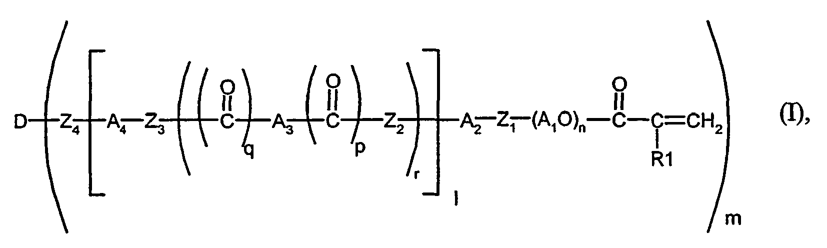 in der
   - m: für 2, 3 oder 4 steht,
   - D: den m-wertigen Rest eines aliphatischen oder aromatischen Kohlenwasserstoffs bedeutet,
   - R₁: Wasserstoff oder Methyl ist,
   - Z₁, Z₂ und Z₃: unabhängig voneinander für Sauerstoff, Schwefel, die -N(R)-Gruppe, (in der R Wasserstoff oder unsubstituiertes oder substituiertes, bevorzugt unsubstituiertes, Alkyl, Aralkyl oder Aryl ist) oder einen zweiwertigen Rest der Formel (II) 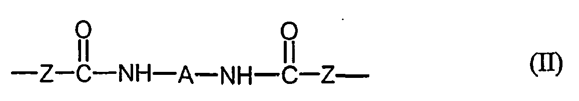 stehen, in der
   - Z: Sauerstoff, Schwefel oder die -N(R)-Gruppe bedeutet, und
   - A: ein unsubstituierter oder substituierter, bevorzugt unsubstituierter, zweiwertiger Rest eines aliphatischen, cycloaliphatischen, araliphatischen oder aromatischen Kohlenwasserstoffs ist,
   - Z₄: für Sauerstoff, den zweiwertigen Rest der Formel (II) oder einen der folgenden zweiwertigen Reste 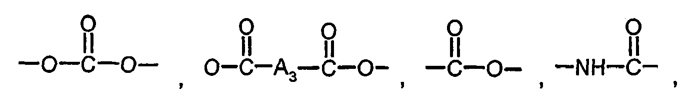 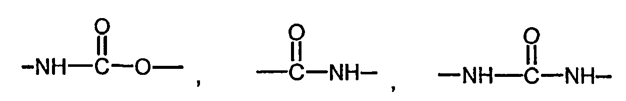 steht,
   - A₁, A₂, A₃ und A₄: unabhängig voneinander einen unsubstituierten oder substituierten, bevorzugt unsubstituierten, zweiwertigen Rest eines aliphatischen, cycloaliphatischen, aromatisch-aliphatischen oder aromatischen Kohlenwasserstoffs bedeuten,
   - n: für Null oder eine ganze Zahl von 1 bis 20 steht,
   - p, q und r: unabhängig voneinander den Wert Null oder 1 annehmen können und
   - 1: einen solchen Zahlenwert hat, dass das Gewichtsmittel der Molmasse der Verbindung nachFormel (I) 450 bis 5000 beträgt, und
B) eine oder mehrere verschiedene Verbindungen nach Formel (III) 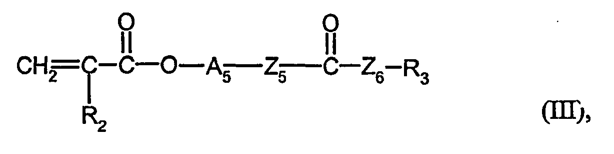 in der
   - R₂: Wasserstoff oder Methyl ist,
   - A₅: einen unsubstituierten oder substituierten, bevorzugt unsubstituierten, zweiwertigen Rest eines aliphatischen oder cycloaliphatischen Kohlenwasserstoffs bedeutet,
   - Z₅ und Z₆: unabhängig voneinander für Sauerstoff, Schwefel oder die -N(R')-Gruppen stehen, in der R' H oder unsubstituiertes oder substituiertes, bevorzugt unsubstituiertes, Alkyl, Aralkyl oder Aryl ist, und
   - R₃: ein unsubstituierter oder substituierter, bevorzugt ein unsubstituierter, Alkyl-, Cycloalkyl- oder Aralkyl-Rest ist,
wobei die Beschichtung einen oder mehrere verschiedene Stabilisatoren ausgewählt aus der Gruppe bestehend aus organischen Phosphiten und organischen Sulfiden enthält.

Unter den genannten Lichtleitern sind solche bevorzugt, bei denen A₁, A₂, A₃, A₄ und A unabhängig voneinander für einen unsubstituierten oder substituierten, bevorzugt unsubstituierten, zweiwertigen aliphatischen oder cycloaliphatischen Kohlenwasserstoffrest stehen.

Weiterhin sind unter den genannten Lichtleitern solche bevorzugt, bei denen p und q den Wert 1 haben,
- Z₂ und Z₃: Sauerstoff bedeuten,
- Z₁: für Sauerstoff oder die Gruppe 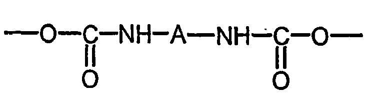 steht, in der A ein unsubstituierter oder substituierter, bevorzugt unsubstituierter, zweiwertiger Rest eines aliphatischen oder cycloaliphatischen C₂-C₁₈-Kohlenwasserstoffs, vorzugsweise der Rest 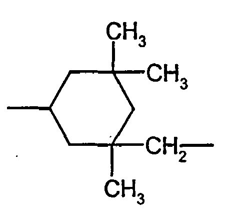 ist,
- Z₄: für Sauerstoff oder die Gruppe 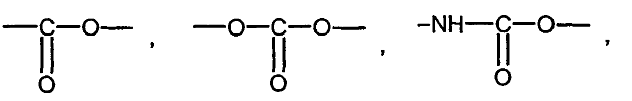 oder 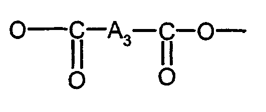 steht,
in der A₃ ein unsubstituierter oder substituierter, bevorzugt ein unsubstituierter, C₂-C₁₈-Rest eines aliphatischen oder cycloaliphatischen Kohlenwasserstoffs ist,
- A₁: ein Ethylen- oder Propylen-1,2-Rest ist und
- A₂, A₃ und A₄: unabhängig voneinander unsubstituierte oder substituierte, bevorzugt unsubstituierte, zweiwertige Reste, vorzugsweise C₂-C₈-Reste, aliphatischer oder cycloaliphatischer Kohlenwasserstoffe sind.

Unter den genannten Lichtleitern sind diejenigen bevorzugt, bei denen in Formel (III)
- A₅: ein unsubstituierter oder substituierter, bevorzugt unsubstituierter, C₂-C₆-Alkylen-Rest ist,
- Z₅ und Z₆: unabhängig voneinander für Sauerstoff oder die -NH-Gruppe stehen und
- R₃: ein C₁-C₁₈-Alkylrest ist.

Unter den genannten Lichtleitern sind diejenigen bevorzugt, bei denen in Formel (III)
- R₃: für einen unsubstituierten oder substituierten, bevorzugt unsubstituierten, C₁-C₅-Alkylrest,
- A₅: für einen Ethylenrest und
- Z₅: für Sauerstoff und Z₆ für die -NH-Gruppe stehen.

Die Stabilisatoren sind Verbindungen, die Schutz gegen thermooxidative Alterung der Beschichtung bieten oder die als Radikalfänger wirken.

Die Stabilisatoren sind ausgewählt aus der Gruppe bestehend aus organischen Phosphiten und organischen Sulfiden.

Es ist bevorzugt, dass die Konzentrationen der Stabilisatoren in der Beschichtung 0,01 Gew.-% bis 0,5 Gew.-% beträgt.

Es ist bevorzugt, dass bei den genannten beschichteten Lichtleitern der Anteil der Wiederholungseinheiten abgeleitet von den unter A) genannten Monomeren in dem Polymer 25 bis 75 Gew.-% beträgt und der Anteil der Wiederholungseinheiten, abgeleitet von den unter B) genannten Monomeren, in dem Polymer 25 bis 75 Gew.-% beträgt und wobei die Summe der Anteile der Wiederholungseinheiten, abgeleitet von den unter A) und B) genannten Monomeren, in dem Polymer 50 bis 100 Gew.-%, besonders bevorzugt 100 Gew.-% beträgt.

Weiterhin wird die erfindungsgemäße Aufgabe gelöst durch ein Verfahren zur Herstellung der erfindungsgemäßen Lichtleiter durch Beschichten des Kerns des Lichtleiters mit einer Zusammensetzung enthaltend die Monomere A) und B) und die Stabilisatoren und einen oder mehrere verschiedene Fotoinitiatoren, wobei die Zusammensetzung auf dem Kern durch UV-Strahlen polymerisiert wird.

Bevorzugt ist ein Verfahren, bei dem der Anteil des Fotoinitiators an der Zusammensetzung 0,1 bis 10 Gew.-% beträgt.

Weiterhin wird die erfindungsgemäße Aufgabe gelöst durch Lichtleiter erhältlich nach dem erfindungsgemäßen Verfahren.

Weiterhin wird die erfindungsgemäße Aufgabe gelöst durch die Verwendung des erfindungsgemäßen Lichtleiters in Transportmitteln.

Weiterhin wird die erfindungsgemäße Aufgabe gelöst durch Transportmittel enthaltend den erfindungsgemäßen Lichtleiter.

Erfindungsgemäß enthält die Beschichtung einen oder mehrere verschiedene Stabilisatoren, bevorzugt in Konzentrationen von 0,01 Gew.-% bis 0,5 Gew.-%, besonders bevorzugt 0,05 Gew.-% bis 0,3 Gew.-%.

Erfindungsgemäß sind als Stabilisatoren Verbindungen geeignet, ausgewählt aus der Gruppe bestehend aus organischen Phosphiten und organischen Sulfiden. Ganz besonders bevorzugt sind organische Sulfide mit sterisch gehinderten phenolischen Gruppen.

Weiterhin bevorzugt aber nicht gemäss der Erfindung sind Stabilisatoren, die als Strukturelement 3-[3',5'-Bis(1",1"-dimethylethyl)-4'-hydr~oxyphenyl]propionsäure oder davon abgeleitete Strukturen enthalten.

Die Lösungen der erfindungsgemäßen Aufgabe, die Gegenstand der vorliegenden Erfindung sind, haben zahlreiche Vorteile. Die vorteilhaften Eigenschften der Polycarbonatfasem, wie sie bereits genannt wurden, werden nicht beeinträchtigt. Sie werden durch die erfindungsgemäße Beschichtung in den erfindungsgemäßen Lichtleitern sogar noch verstärkt. Die optischen, mechanischen und thermischen Eigenschaften der erfindungsgemäßen Lichtleiter sind sehr gut. Sie sind unempfindlich gegen thermooxidative Einflüsse.

Die Härtungsgeschwindigkeit der erfindungsgemäßen Beschichtungen ist sehr hoch, wodurch eine vorteilhafte Herstellung möglich wird.

Die erfindungsgemäßen Beschichtungen gewährleisten, dass es zu keiner Spannungsrissbildung in der Polycarbonatfaser kommt.

Die Verwendung der erfindungsgemäßen Lichtleiter in Transportmitteln ist vorteilhaft, weil die erfindungsgemäßen Lichtleiter gegenüber bekannten Lichtleitern, beispielsweise solchen aus Glas, eine Gewichtsreduktion ermöglichen. Außerdem haben sie vorteilhafte mechanischen Eigenschaften, insbesondere sind die erfindungsgemäßen Lichtleiter im Vergleich zu Lichtleitern aus Glas unzerbrechlich. Außerdem ermöglichen die erfindungsgemäßen Lichtleiter eine wesentlich vereinfachte Handhabung und eine bessere Verbindungstechnik.

In Automobilen sind zur Signalübertragung Kupferkabel üblich gegenüber denen eine deutliche Gewichtsreduktion möglich ist.

Transportmittel im Sinne der vorliegenden Erfindung sind insbesondere Automobile, Schienenfahrzeuge, Schiffe und Flugzeuge.

Die erfindungsgemäßen Stabilisatoren sind bekannt oder lassen sich nach bekannten Verfahren herstellen. Teilweise sind sie im Handel erhältlich. Sie sind beispielsweise bei der Firma Ciba Spezialitäten GmbH, Lampertheim, Deutschland, erhältlich.

Die Monomeren für die erfindungsgemäßen Beschichtungen sind bekannt oder lassen sich nach bekannten Verfahren herstellen. Teilweise sind sie im Handel erhältlich.

Für D seien als vierwertige Reste aliphatischer oder aromatischer Kohlenwasserstoffe beispielsweise die vierwertigen aliphatischen Alkohole, wie z.B. Pentaerythrit, zugrundeliegenden Kohlenwasserstoffreste genannt.

Für D seien als dreiwertige Reste aliphatischer oder aromatischer Kohlenwasserstoffe beispielsweise die aliphatischen Triolen, wie Glycerin, Trimethylolethan, Trimethylolpropan oder Hexantriol, aromatischen Tricarbonsäuren, wie Benzol-1,2,4-tricarbonsäure oder Benzol-1,3,5-tricarbonsäure oder aromatischen Triisocyanate, wie 2,4,6-Toluylentriisocyanat oder 4,4',4"-Triphenylmethantriisocyanat, zugrundeliegenden Kohlenwasserstoffreste genannt.

Für D, A₁, A₂, A₃, A₄ und A₅ seien als gegebenenfalls substituierte zweiwertige Reste aliphatischer, cycloaliphatischer, araliphatischer oder aromatischer Kohlenwasserstoffe vor allem die aliphatischen Diolen, wie Ethylenglykol, 1,2-Propandiol, 1,3-Propandiol, 2,2-Dimethyl-1,3-propandiol, 1,2-Butandiol, 1,3-Butandiol, 2,3-Butandiol, 1,4-Butandiol, 1,5-Pentandiol, 1,6- und 2,5-Hexandiol, Diethylenglykol, Triethylenglykol, Dipropylenglykol, 2,2,4-Trimethylpentandiol-1,3, 2-Methylpentandiol-2,4 und 2-Ethylhexandiol-1,3 oder cycloaliphatischen Diolen, wie 2,2-Dimethyl-4,4-dimethyl-cyclobutandiol, 1,2-Cyclopentandiol, 1,3-Cyclopentandiol, 1,2-, 1,3- und 1,4-Cyclohexandiol, 1,4-Bishydroxymethylcyclohexan, 2,2-Bis-(4-hydroxycyclohexyl)-propan, 1-Methyl-2,2-bis-(4-hydroxycyclohexyl)-ethan, 2-Methyl-2,4-bis-(4-hydroxycyclohexyl)-pentan und Bis-hydroxymethyl-hexahydro-4,7-methano-indan, zugrundeliegenden Kohlenwasserstoffreste genannt.

Für A₃ seien darüber hinaus noch die aliphatischen Dicarbonsäuren wie Bernsteinsäure, Dimethylmalonsäure, Glutarsäure, Methylbernsteinsäure, Adipinsäure, Dimethylbemsteinsäure, Pimellinsäure, Korksäure, Azelainsäure, Sebacinsäure, Decandicarbonsäure oder Dimerfettsäure oder cycloaliphatischen Dicarbonsäuren wie 1,2-, 1,3-, 1,4-Cyclohexandicarbonsäure, und aromatischen Carbonsäuren wie Terephthalsäure, Isophthalsäure, Phthalsäure, Naphthalin-1,2-, -1,4-, -1,5-, -1,8-dicarbonsäure, 5-Methylisophthalsäure, Tetrahydrophthalsäure und Hexahydroendomethylentetrahydrophthalsäure, zugrundeliegenden Kohlenwasserstoffreste genannt.

Für A seien als gegebenenfalls substituierte, zweiwertige aliphatische, cycloaliphatische, araliphatische oder aromatische Kohlenwasserstoffreste vor allem die aliphatischen Diisocyanaten, wie Hexamethylendiisocyanat oder Trimethylhexamethylendiisocyanat-1,6, cycloaliphatischen Diisocyanate, wie Cyclohexan-1,4-diisocyanat, Cyclopentan-1,3-diisocyanat, Methylen-bis-(4,4'-cyclohexyl)-diisocyanat und 1-Isocyanatomethyl-5-isocyanato-1,3,3-trimethylcyclohexan, und aromatischen Diisocyanaten wie 2,4- und 2,6-Toluylen-diisocyanat, 3,3'-Dimethyl-4,4'-diphenylmethandiisocyanat, 4,4'-Diphenylmethandiisocyanat und 4,4'-Diphenyletherdiisocyanat, zugrundeliegenden Kohlenwasserstoffreste genannt.

Für R₃ seien als gegebenenfalls substituierte Alkylreste C₁-C₁₈-Alkylreste wie der Methyl-, Ethyl-, Propyl-, n-Butyl-, sec.-Butyl, i-Propyl-, tert.-Butyl-, i-Butyl-, Pentyl-, i-Pentyl-, Neopentyl-, Heptyl-, n-Hexyl-, 2-Ethyl-hexyl-, Nonyl-, Decyl-, Cetyl-, Dodecyl- und Stearylrest, als cycloaliphatische Reste gegebenenfalls durch Methylgruppen substituierte Cyclopentyl- und Cyclohexylreste genannt. Als araliphatische Reste kommen vor allen Dingen der Benzylrest und durch Methyl- und niedere Alkoxygruppen substituierte Benzylreste in Betracht.

Bei den Verbindungen der Formel (I) (polyfunktionelle Acrylsäurederivate oder Methacrylsäurederivate) handelt es sich um Ether-, Ester-, Urethan- und/oder Harnstoff-Gruppen enthaltende Verbindungen. Vorzugsweise sind es mit Acrylsäurederivaten oder Methacrylsäurederivaten umgesetzte Polyether und/oder Polyester-Polyole.

Bei Verbindungen der der Formel (III) (monofunktionelle Acrylate oder Methacrylate) handelt es sich um mit Acrylsäureester oder Methacrylsäureester, die zusätzlich eine Ester-, Urethan- und/oder Harnstoffgruppe aufweisen.

Die erfindungsgemäßen Polycarbonate können übliche Additive enthalten.

Die erfindungsgemäßen Lichtleiter können weitere Bestandteile enthalten. Beispielsweise können sie haftungsfördernde Zwischenschichten enthalten. Beispielsweise können sie schützende Mantelschichten enthalten, besonders solche, die flexibel aber resistent gegen wässrige Lösungen sowie Mineralöle und Treibstoffe sind, wie z.B. thermoplastische Polyurethane und Kautschuke.

Die erfindungsgemäßen Beschichtungen können übliche Additive enthalten.

Die erfindungsgemäßen Beschichtungen können zusätzlich zu den Komponenten A und B übliche Zusatzstoffe wie z.B. Lösungsmittel, die gegen Polycarbonate inert sind, Polymerisationsinhibitoren, Antioxidantien usw. enthalten.

Fotoinitiatoren sind bekannt und handelsüblich. Als Fotoinitiatoren seien z.B. genannt: Benzoin, Benzoinether, Benzyl, Benzylketale, Benzophenon, Thioxanthon und deren Derivate z.B. Benzylmethylketal und 2-Hydroxy-2-methyl-1-phenyl-propan-1-on.

Polycarbonate und die gängigen Verfahren zu ihrer Herstellung sind z.B. in "Chemistry and Physics of Polycarbonates" Polymer Rev. Vol. 9, Interscience Publishers beschrieben. Sie können gegebenenfalls unter Zusatz bekannter Kettenabbrecher (siehe z.B. EP-A 0 010 602, DE-A 3 143 252). Verzweiger wie Trisphenolen und/oder Isatinbiskresol(phenol) (siehe z.B. DE-A 1 570 533, DE-A 1 595 762, DE-A 2 500 092), Stabilisatoren wie Phosphanen und/oder Phosphiten (siehe z.B. EP-A 0 143 906, DE-A 2140 207) und Entformungsmitteln (siehe z.B. DE-A 2 507 748, DE-A 2 729 485 und DE-A 2 064 095) hergestellt werden. Die Aufarbeitung der Polycarbonate wird bevorzugt in bekannter Weise durch Fällen, Sprühverdampfen oder Extrusion vorgenommen. Die relative Viskosität einer 0,5 %igen Lösung des Polycarbonates in Methylenchlorid liegt bei 25°C bevorzugt zwischen 1,18 und 1,32.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan, das Homopolycarbonat auf Basis eines der folgenden Bisphenole 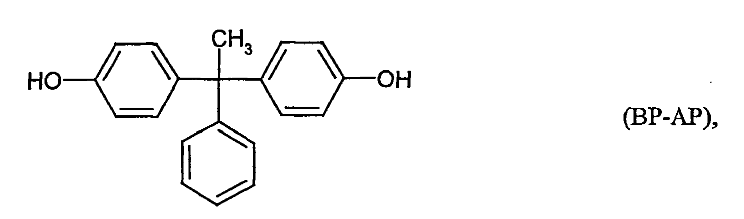 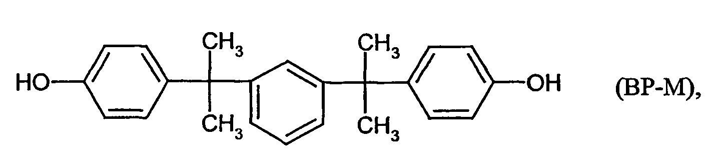 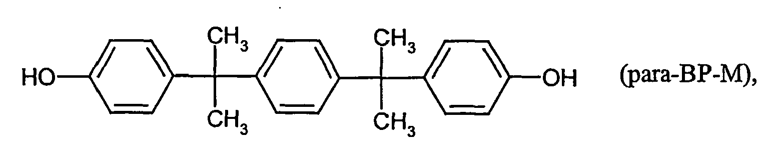 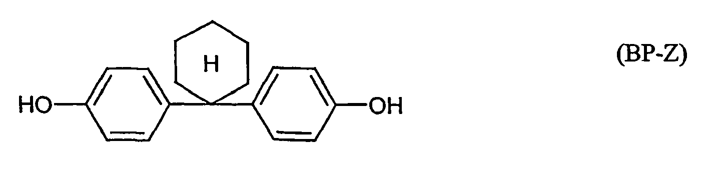 und die Copolycarbonate aus Kombinationen aus den genannten Bisphenolen, insbesondere des Copolycarbonats auf Basis der beiden Monomere Bisphenol A und 1,1-Bis-(4-hydroxyphenyl)-3,3,5-trimethylcyclohexan.

Ganz besonders bevorzugt ist das Homopolycarbonat auf Basis von Bisphenol A.

Das Polycarbonat hat bevorzugt einen Schwermetallgehalt von weniger als 5 ppm, besonders weniger als 3 ppm, ganz besonders weniger als 0,5 ppm. Geringe Schwermetallgehalte bewirken eine geringere optische Dämpfung im Lichtleiter.

Das Polycarbonat kann nach bekannten Verfahren hergestellt werden, z.B. nach dem Phasengrenzflächenverfahren aus Bisphenol und Phosgen oder nach dem Schmelzeumesterungsverfahren aus Kohlensäureester und Bisphenol.

Die Viskosität der erfindungsgemäß auf die Polycarbonatfasern aufzubringenden, durch UV-Strahlen polymerisierbaren Zusammensetzungen kann durch die Wahl des Molekulargewichts der Komponenten A und B und/oder durch das Mengenverhältnis der Komponenten A und B in weiten Grenzen variiert und auf die vorgesehenen Abspinngeschwindigkeiten und Spinntemperaturen der Polycarbonat-Fasem eingestellt werden. Bevorzugt weisen die erfindungsgemäß zu verwendenden Zusammensetzungen eine Viskosität von 500 bis 10 000 cP bei 25°C auf. Die erfindungsgemäß zu verwendenden Zusammensetzungen können bevorzugt bei Temperaturen von 15 bis 140°C verarbeitet werden.

Verfahrensmäßig kann zunächst der Polycarbonat-Kern des Lichtleiters der Polycarbonat-Fasern hergestellt und später mit den erfindungsgemäß aufzubringenden Beschichtungsmaterialien versehen werden. Vorteilhafter ist es jedoch, die Beschichtung unmittelbar nach der Herstellung der Polycarbonatfaser vorzunehmen. Die Dicke der erfindungsgemäß auf die Polycarbonatfaser aufzubringenden Beschichtung ist bevorzugt kleiner als 50 µm.

Die erfindungsgemäßen Lichtleiter können zu ein- oder mehradrigen Kabeln verarbeitet werden, indem man die Lichtleiter einzeln für sich oder mehrere zu einem Bündel zusammengefasste Lichtleiter mit weiteren Polymerschichten, z.B. durch Coextrusion, umhüllt. Die Polymerschicht ist dabei bevorzugt ein thermoplastisches Elastomer.

Die Lichtleiter können duch die Beschichtung zu einem Bündel oder Bändern verklebt sein.

Der Durchmesser der Lichtleiter ist bevorzugt zwischen 0,05 mm bis 5 mm, besonders bevorzugt 0,1 mm bis 3 mm, ganz besonders bevorzugt 0,25 bis 1,5 mm.

Die erfindungsgemäßen Lichtleiter können weiterhin als Beleuchtungselemente verwendet werden. Hierzu wird die Oberfläche der Lichtleiter an der gewünschten Stelle beschädigt. Dadurch wird Licht angekoppelt. Alternativ kann das Licht an den gewünschten Ort, der beleuchtet werden soll, geleitet werden. Zum Beispiel können so Armaturen, beispielsweise in elektronischen Geräten wie Radios oder Computer, beleuchtet werden.

### Beispiele

### Herstellung der Beschichtung

### Komponente A:

In einem Kessel wurden 56,62 kg Hydroxyethylacrylat, 0,0483 kg Di-tert.-butyl-hydrochinon und 0,0483 kg Desmorapid SO (Zinn-(II)-ethylhexoat der Firma Bayer AG, Leverkusen, Deutschland) vorgelegt und unter Rühren auf 40°C aufgeheizt. Während des Aufheizens und der folgenden Reaktion wurden 200 1 Luft/h durchgeleitet. Als 40°C erreicht waren, wurden 48,28 kg n-Butylisocyanat in 8 h zugetropft. Es wurde darauf geachtet, daß die Reaktionstemperatur dabei 45°C nicht überschritt. Anschließend wurde 2 h bei 45°C gerührt, dann wurde auf 60°C aufgeheizt und 4 h bei dieser Temperatur gerührt. Eine Probe zeigte einen NCO-Gehalt von weniger als 0,1 Gew.-%.

### Komponente B:

37,36 kg Poly-THF wurden mit 0,2 kg Di-tert.-butylhydrochinon und 0,1 kg Desmorapid SO und 32,56 kg Hydroxyethylacrylat vorgelegt und unter Rühren auf 40°C aufgeheizt. Während des Aufheizens und der folgenden Reaktion wurden 2001 Luft/h durchgeleitet. Als 40°C erreicht waren, wurden 32,56 kg Isophorondiisocyanat in 8 h zu getropft. Es wurde darauf geachtet, daß die Reaktionstemperatur dabei 45°C nicht überschritt. Anschließend wurde 2 h bei 45°C gerührt, dann wurde auf 60°C aufgeheizt und 4 h bei dieser Temperatur gerührt. Eine Probe zeigte einen NCO-Gehalt von weniger als 0,1 Gew.-%.

### Zubereitung der Beschichtung:

99,5 kg Komponente B wurden zusammen mit 597 g Darocur 1173 und 199 g des im folgenden angegebenen Stabilisator vorgelegt und auf 50°C erwärmt (im Falle des Vergleichsversuches wird kein Stabilisator verwendet). 99,5 kg Komponente A wurden zügig zugegeben. Nach Mischen wurde die Beschichtung bei 50 bis 60°C und 3 bar über ein Filter in Polyethylen-ausgekleidete Gebinde filtriert.

Darocur 1173 ist ein Handelsprodukt der Firma Merck in Darmstadt, Deutschland. Es ist

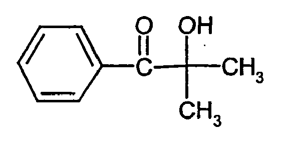

Polycarbonat Lichtleiter mit einem Durchmesser von ca. 1 mm wurden mit einer 15 µm dicken Beschichtung umhüllt und die Reißdehnung unmittelbar nach Beschichtung, bzw nach 50 h und nach 100 h Lagerung des Lichtleiters bei 120°C im Umluftschrank gemessen.

### Durchführung der Beschichtung:

Eine Polycarbonatfaser wurde senkrecht von oben nach unten zentrisch durch ein Gefäß gezogen, welches an seinem Boden eine Düse besaß. Das Gefäß wurde jeweils mit einem der nachstehend beschriebenen Beschichtungsgemische gefüllt. Durch den zwischen Faden und Düse verbleibenden Ringspalt erfolgte die gleichmäßige Beschichtung der Faser mit dem betreffenden Gemisch.

Unterhalb des Beschichtungsgefäßes befand sich parallel zum Faden eine 20 cm lange Quecksilbermitteldrucklampe (Leistung: 120 W/cm), deren Brennlinie mittels Parabolspiegel auf dem Faden fokussiert war, um eine möglichst hohe Lichtausbeute für die UV-Polymerisation der Beschichtungsgemische zu erhalten.

Nach Passieren einer Umlenkrolle wurde der beschichtete Faden auf eine große Trommel gewickelt, die mittels eines Motorantriebs für das Durchziehen des Fadens durch die Anlage sorgte, wobei die Geschwindigkeit konstant 5 m/min betrug.

Die Dicke der auf den Polycarbonatfaden aufgebrachten Beschichtung betrug in allen Fällen 10 bis 30 µm.

### Vergleichsversuch ohne Verwendung eines Stabilisators:

Reißdehnung der Beschichtung nach
- der Härtung : 57%
- nach 50h/120°C 52%
- nach 75h/120°C 43%
- nach 100h/120°C 2%

Man erkennt deutlich den starken Abfall der Reißdehnung durch die Lagerung bei erhöhten Temperaturen an Luft.

### Nicht erfindungsgemässes Beispiel:

A) Als Stabilisator wurde 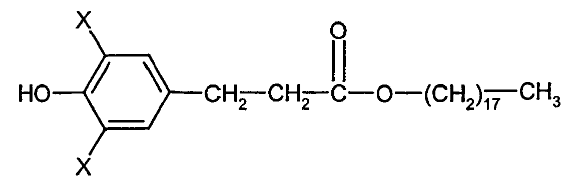 im Handel als Iganox 1076 erhältlich, vertrieben von der Firma Ciba, verwendet.

Reißdehnung der Beschichtung nach
- der Härtung : 57%
- nach 50h/120°C 56%
- nach 75h/120°C 56%
- nach 100h/120°C 55%

### Erfindungsgemässes Beispiel

B) Als Stabilisator wurde 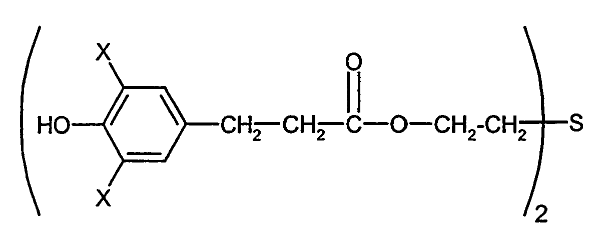 im Handel als Irganox 1035 erhältlich, vertrieben von der Firma Ciba verwendet

Reißdehnung der Beschichtung nach
- der Härtung : 57%
- nach 50h/120°C 58%
- nach 75h/120°C 58,5%
- nach 100h/120°C 60%

Man erkennt, daß hier die Reißdehnung sogar leicht ansteigt

## Patentansprüche

1. Lichtleiter umfassend einen Kern aus Polycarbonat und eine Beschichtung enthaltend ein Polymer, das Wiederholungseinheiten enthält, abgeleitet von den Monomeren
A) eine oder mehrere verschiedene Verbindungen nach Formel (I) 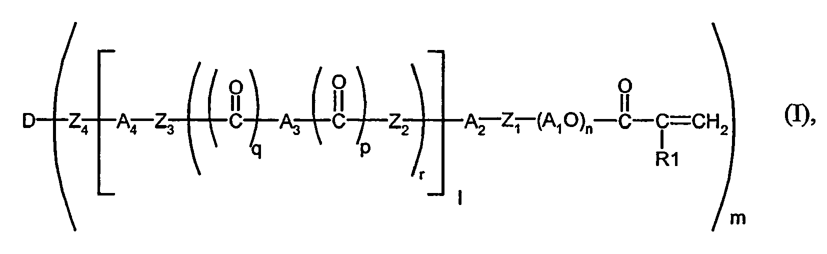 in der
m für 2, 3 oder 4 steht,
D den m-wertigen Rest eines aliphatischen oder aromatischen Kohlenwasserstoffs bedeutet,
R₁ Wasserstoff oder Methyl ist,
Z₁, Z₂ und Z₃ unabhängig voneinander für Sauerstoff, Schwefel, die -N(R)-Gruppe, (in der R Wasserstoff oder unsubstituiertes oder substituiertes Alkyl, Aralkyl oder Aryl ist) oder einen zweiwertigen Rest der Formel (II) 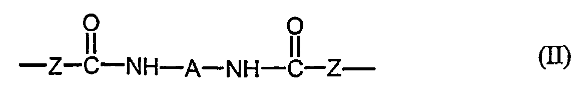 stehen, in der
Z Sauerstoff, Schwefel oder die -N(R)-Gruppe bedeutet, und
A ein unsubstituierter oder substituierter zweiwertiger Rest eines aliphatischen, cycloaliphatischen, araliphatischen oder aromatischen Kohlenwasserstoffs ist,
Z₄ für Sauerstoff, den zweiwertigen Rest der Formel (II) oder einen der folgenden zweiwertigen Reste 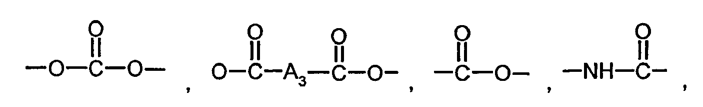 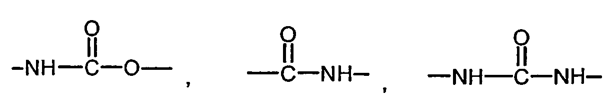 steht,
A₁, A₂, A₃ und A₄ unabhängig voneinander einen unsubstituierten oder substituierten zweiwertigen Rest eines aliphatischen, cycloaliphatischen, aromatisch-aliphatischen oder aromatischen Kohlenwasserstoffs bedeuten,
n für Null oder eine ganze Zahl von 1 bis 20 steht,
p, q und r unabhängig voneinander den Wert Null oder 1 annehmen können und
1 einen solchen Zahlenwert hat, dass das Gewichtsmittel der Molmasse der Verbindung nach Formel (I) 450 bis 5000 beträgt, und
B) eine oder mehrere verschiedene Verbindungen nach Formel (III) 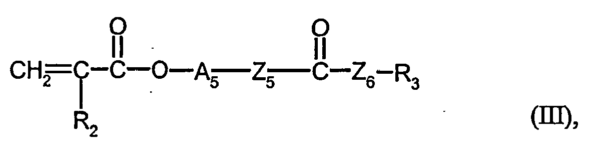 in der
R₂ Wasserstoff oder Methyl ist,
A₅ einen unsubstituierten oder substituierten zweiwertigen Rest eines aliphatischen oder cycloaliphatischen Kohlenwasserstoffs bedeutet,
Z₅ und Z₆ unabhängig voneinander für Sauerstoff, Schwefel oder die -N(R')-Gruppen stehen, in der R' H oder unsubstituiertes oder substituiertes Alkyl, Aralkyl oder Aryl ist, und
R₃ ein unsubstituierter oder substituierter Alkyl-, Cycloalkyl- oder Aralkyl-Rest ist,
**dadurch gekennzeichnet, dass** die Beschichtung einen oder mehrere verschiedene Stabilisatoren ausgewählt aus der Gruppe bestehend aus organischen Phosphiten und organischen Sulfiden enthält.

2. Lichtleiter nach Anspruch 1, wobei A₁, A₂, A₃, A₄ und A unabhängig voneinander für einen unsubstituierten oder substituierten, zweiwertigen aliphatischen oder cycloaliphatischen Kohlenwasserstoffrest stehen.

3. Lichtleiter nach Anspruch 1, wobei
p und q den Wert 1 haben,
Z₂ und Z₃ Sauerstoff bedeuten,
Z₁ für Sauerstoff oder die Gruppe 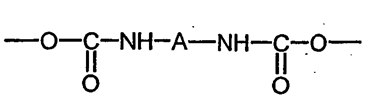 steht, in der A ein unsubstituierter oder substituierter, zweiwertiger Rest eines aliphatischen oder cycloaliphatischen C₂-C₁₈-Kohlenwasserstoffs ist,
Z₄ für Sauerstoff oder die Gruppe 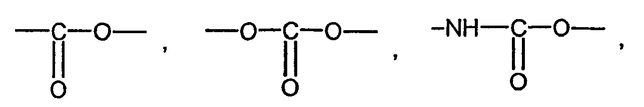 oder 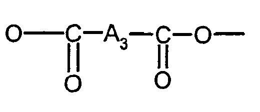 steht,
in der A₃ ein unsubstituierter oder substituierter C₂-C₁₈-Rest eines aliphatischen oder cycloaliphatischen Kohlenwasserstoffs ist,
A₁ ein Ethylen- oder Propylen-1,2-Rest ist und
A₂, A₃ und A₄ unabhängig voneinander unsubstituierte oder substituierte, zweiwertige Reste, vorzugsweise C₂-C₈-Reste, aliphatischer oder cycloaliphatischer Kohlenwasserstoffe sind.

4. Lichtleiter nach einem der Ansprüche 1 bis 3, wobei in Formel (III)
A₅ ein unsubstituierter oder substituierter C₂-C₆-Alkylen-Rest ist,
Z₅ und Z₆ unabhängig voneinander für Sauerstoff oder die -NH-Gruppe stehen und
R₃ ein C₁-C₁₈-Alkylrest ist.

5. Lichtleiter nach einem der Ansprüche 1 bis 4, wobei in Formel (III)
R₃ für einen unsubstituierten oder substituierten C₁-C₅-Alkykest,
A₅ für einen Ethylenrest und
Z₅ für Sauerstoff und Z₆ für die -NH-Gruppe stehen.

6. Lichtleiter nach einem der Ansprüche 1 bis 5, wobei der Anteil der Wiederholungseinheiten abgeleitet von den in Anspruch 1 unter A) genannten Monomeren in dem Polymer 25 bis 75 Gew.-% beträgt und der Anteil der Wiederholungseinheiten, abgeleitet von den in Anspruch 1 unter B) genannten Monomeren, in dem Polymer 25 bis 75 Gew.-% beträgt und wobei die Summe der Anteile der Wiederholungseinheiten, abgeleitet von den in Anspruch 1 unter A) und unter B) genannten Monomeren, in dem Polymer 50 bis 100 Gew.-% beträgt.

7. Lichtleiter nach einem der Ansprüche 1 bis 6, wobei die Konzentrationen der Stabilisatoren in der Beschichtung 0,01 Gew.-% bis 0,5 Gew.-% beträgt.

8. Verfahren zur Herstellung des Lichtleiters nach einem der Ansprüche 1 bis 7, durch Beschichten des Kerns des Lichtleiters mit einer Zusammensetzung enthaltend die Monomere A) und B) und die Stabilisatoren und einen oder mehrere verschiedene Fotoinitiatoren, wobei die Zusammensetzung auf dem Kern durch UV-Strahlen polymerisiert wird.

9. Verfahren nach Anspruch 8, wobei der Anteil des Fotoinitiators an der Zusammensetzung 0,1 bis 10 Gew.-% beträgt.

10. Lichtleiter erhältich nach dem Verfahren nach Anspruch 8 oder 9.

11. Verwendung des Lichtleiters nach einem der Ansprüche 1 bis 7 oder nach Anspruch 10 in Transportmitteln.

12. Transportmittel enthaltend den Lichtleiter nach einem der Ansprüche 1 bis 7 oder nach Anspruch 10.

## Claims

1. A light guide including a core of polycarbonate and a coating containing a polymer which contains repeating units derived from the monomers
A) one or more different compounds of the formula (I) 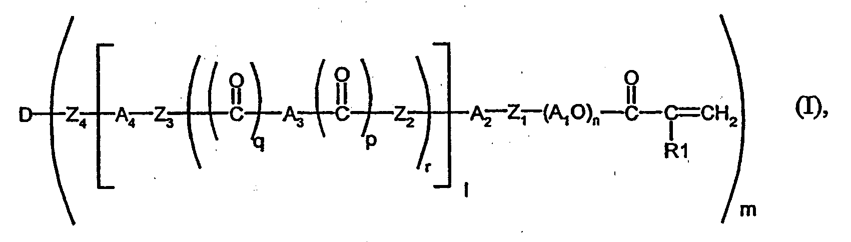 in which
m represents 2, 3 or 4,
D represents the m-valent group from an aliphatic or aromatic hydrocarbon,
R₁ is hydrogen or methyl,
Z₁, Z₂ and Z₃, independently, represent oxygen, sulfur, the -N(R) group (in which R is hydrogen or unsubstituted or substituted alkyl, aralkyl or aryl) or a divalent group of the formula (II) 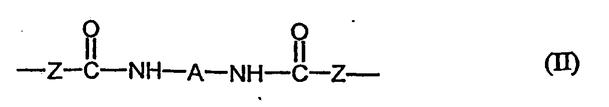 in which
Z represents oxygen, sulfur or the -N(R) group, and
A represents an unsubstituted or substituted divalent group from an aliphatic, cycloaliphatic, araliphatic or aromatic hydrocarbon,
Z₄ represents oxygen, the divalent group of the formula (II) or one of the following divalent groups 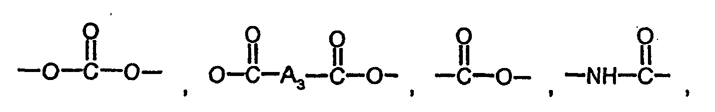 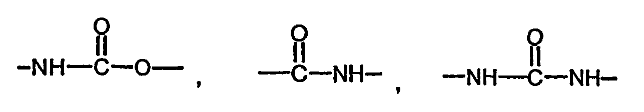
A₁, A₂, A₃ and A₄, independently, represent an unsubstituted or substituted divalent group from an aliphatic, cycloaliphatic, aromatic-aliphatic or aromatic hydrocarbon,
n is zero or an integer from 1 to 20,
p, q and r, independently, may take on the value zero or 1 and
1 has a numerical value such that the weight average of the molecular weight of the compound of the formula (I) is 450 to 5000, and
B) one or more different compounds of the formula (III) 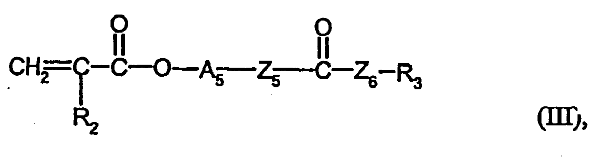 in which
R₂ is hydrogen or methyl,
A₅ represents an unsubstituted or substituted divalent group from an aliphatic or cycloaliphatic hydrocarbon,
Z₅ and Z₆, independently, represent oxygen, sulfur or the -N(R') groups, in which R' is hydrogen or unsubstituted or substituted alkyl, aralkyl or aryl, and
R₃ is an unsubstituted or substituted alkyl, cycloalkyl or aralkyl group,
**characterised in that** the coating contains one or more different stabilisers chosen from the group consisting of organic phosphites and organic sulfides.

2. A light guide according to Claim 1, wherein A₁, A₂, A₃, A₄ and A, independently, represent an unsubstituted or substituted divalent aliphatic or cycloaliphatic hydrocarbon group.

3. A light guide according to Claim 1, wherein
p and q have the value 1,
Z₂ and Z₃ represent oxygen,
Z₁ represents oxygen or the group 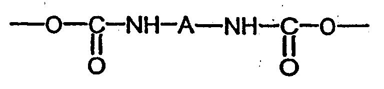 in which A is an unsubstituted or substituted divalent group from an aliphatic or cycloaliphatic C₂-C₁₈ hydrocarbon,
Z₄ represents oxygen or the group 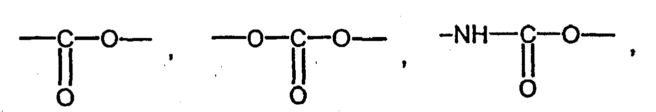 or 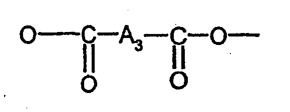 in which A₃ is an unsubstituted or substituted C₂-C₁₈ group from an aliphatic or cycloaliphatic hydrocarbon,
A₁ is an ethylene or propylene-1,2 group and
A₂, A₃ and A₄, independently, are unsubstituted or substituted divalent groups, preferably C₂-C₈ groups, from aliphatic or cycloaliphatic hydrocarbons.

4. A light guide according to any one of Claims 1 to 3, wherein in formula (III)
A₅ is an unsubstituted or substituted C₂-C₆ alkylene group,
Z₅ and Z₆, independently, represent oxygen or the - NH group and
R₃ is a C₁-C₁₈ alkyl group.

5. A light guide according to any one of Claims 1 to 4, wherein in formula (III),
R₃ represents an unsubstituted or substituted C₁-C₅ alkyl group,
A₅ represents an ethylene group and
Z₅ represents oxygen and Z₆ represents the -NH group.

6. A light guide according to any one of Claims 1 to 5, wherein the proportion of repeating units in the polymer derived from the monomers mentioned under A) in Claim 1 is 25 to 75 wt.% and the proportion of repeating units in the polymer derived from the monomers mentioned under B) in Claim 1 is 25 to 75 wt.% and wherein the sum of the proportions of repeating units in the polymer derived from the monomers mentioned under A) and B) in Claim 1 is 50 to 100 wt.%.

7. A light guide according to any one of Claims 1 to 6, wherein the concentration of stabilisers in the coating is 0.01 wt.% to 0.5 wt.%.

8. A process for producing the light guide according to any one of Claims 1 to 7 by coating the core of the light guide with a composition containing monomers A) and B) and the stabilisers and one or more different photoinitiators, wherein the composition is polymerised on the core using UV irradiation.

9. A process according to Claim 8, wherein the proportion of photoinitiator in the composition is 0.1 to 10 wt.%.

10. A light guide obtainable by the process according to Claim 8 or 9.

11. Use of the light guide according to any one of Claims 1 to 7 or according to Claim 10 in means of transport.

12. A means of transport containing the light guide according to any one of Claims 1 to 7 or according to Claim 10.

## Revendications

1. Fibre optique comprenant un noyau en polycarbonate et un revêtement contenant un polymère qui contient des unités répétées dérivées des monomères
A) un ou plusieurs composés différents selon la formule (I) 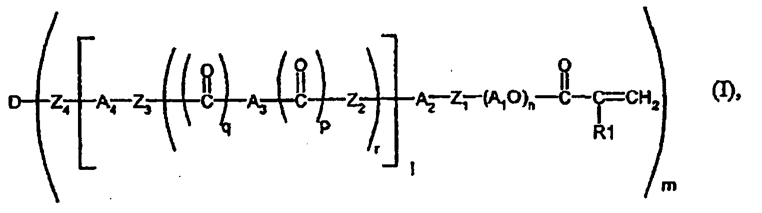 où
m représente 2, 3 ou 4,
D représente le groupement m-valent d'un hydrocarbure aliphatique ou aromatique,
R₁ est l'hydrogène ou méthyle,
Z₁, Z₂ et Z₃ représentent indépendamment les uns des autres l'oxygène, le soufre, le groupe -N(R)- (où R est l'hydrogène ou alkyle, aralkyle ou aryle non substitué ou substitué) ou un groupement divalent de formule (II) 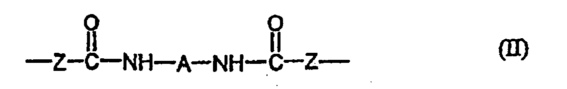
où
Z représente l'oxygène, le soufre ou le groupe -N(R)-,
et
A est un groupement divalent non substitué ou substitué d'un hydrocarbure aliphatique, cycloaliphatique, araliphatique ou aromatique,
Z₄ représente l'oxygène, le groupement divalent de formule (II) ou l'un des groupements divalents suivants 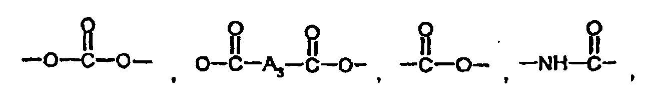 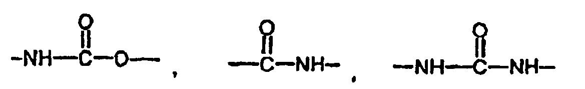
A₁, A₂, A₃ et A₄ représentent indépendamment les uns des autres un groupement divalent non substitué ou substitué d'un hydrocarbure aliphatique, cycloaliphatique, aromatique-aliphatique ou aromatique,
n représente zéro ou un nombre entier de 1 à 20,
p, q et r peuvent prendre indépendamment les uns des autres la valeur zéro ou 1 et
I a une valeur numérique telle que la moyenne en poids de la masse moléculaire du composé selon la formule (I) est 450 à 5000, et
B) un ou plusieurs composés différents selon la formule (III) 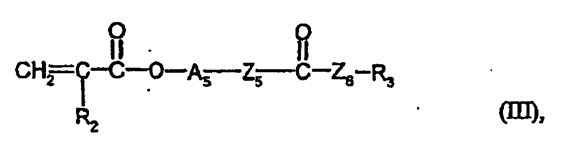 où
R₂ est l'hydrogène ou méthyle,
A₅ représente un groupement divalent non substitué ou substitué d'un hydrocarbure aliphatique ou cycloaliphatique,
Z₅ et Z₆ représentent indépendamment l'un de l'autre l'oxygène, le soufre ou les groupes -N(R')- où R' est H ou alkyle, aralkyle ou aryle non substitué ou substitué, et
R₃ est un groupement alkyle, cycloalkyle ou aralkyle non substitué ou substitué,
**caractérisée en ce que** le revêtement contient un ou plusieurs stabilisants différents choisis dans le groupe consistant en les phosphites organiques et les sulfures organiques.

2. Fibre optique selon la revendication 1 où A₁, A₂, A₃, A₄ et A représentent indépendamment les uns des autres un groupement hydrocarboné aliphatique ou cycloaliphatique divalent non substitué ou substitué.

3. Fibre optique selon la revendication 1 où
p et q ont la valeur 1,
Z₂ et Z₃ représentent l'oxygène,
Z₁ représente l'oxygène ou le groupe 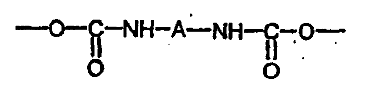 où A est un groupement divalent non substitué ou substitué d'un hydrocarbure en C₂-C₁₈ aliphatique ou cycloaliphatique,
Z₄ représente l'oxygène ou le groupe 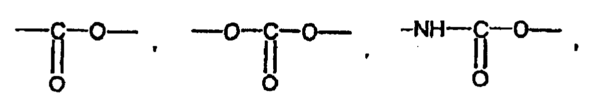 ou 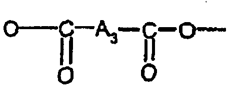 où A₃ est un groupement en C₂-C₁₈ non substitué ou substitué d'un hydrocarbure aliphatique ou cycloaliphatique,
A₁ est un groupement éthylène- ou propylène-1,2- et
A₂, A₃ et A₄ représentent indépendamment les uns des autres des groupements divalents non substitués ou substitués, de préférence des groupements en C₂-C₈, d'hydrocarbures aliphatiques ou cycloaliphatiques.

4. Fibre optique selon l'une des revendications 1 à 3 où, dans la formule (III),
A₅ est un groupement alkylène en C₂-C₆ non substitué ou substitué,
Z₅ et Z₆ représentent indépendamment l'un de l'autre l'oxygène ou le groupe -NH- et
R₃ est un groupement alkyle en C₁-C₁₈.

5. Fibre optique selon l'une des revendications 1 à 4 où, dans la formule (III),
R₃ représente un groupement alkyle en C₁-C₅ non substitué ou substitué,
A₅ représente un groupement éthylène et
Z₅ représente l'oxygène et Z₆ représente le groupe -NH-.

6. Fibre optique selon l'une des revendications 1 à 5 où la proportion des unités répétées dérivées des monomères cités en A) dans la revendication 1 dans le polymère est 25 à 75 % en masse et la proportion des unités répétées dérivées des monomères cités en B) dans la revendication 1 dans le polymère est 25 à 75 % en masse et où la somme des proportions des unités répétées dérivées des monomères cités en A) et B) dans la revendication 1 dans le polymère est de jusqu'à 100 % en masse.

7. Fibre optique selon l'une des revendications 1 à 6 où les concentrations des stabilisants dans le revêtement sont 0,01 % en masse à 0,5 % en masse.

8. Procédé pour produire la fibre optique selon l'une des revendications 1 à 7 par revêtement du noyau de la fibre optique avec une composition contenant les monomères A) et B) et les stabilisants et un ou plusieurs photo-initiateurs différents, où la composition est polymérisée par des rayons UV sur le noyau.

9. Procédé selon la revendication 8 où la proportion de photo-initiateur dans la composition est 0,1 à 10 % en masse.

10. Fibre optique pouvant être obtenue selon le procédé selon la revendication 8 ou 9.

11. Utilisation de la fibre optique selon l'une des revendications 1 à 7 ou selon la revendication 10 dans des moyens de transport.

12. Moyen de transport contenant la fibre optique selon l'une des revendications 1 à 7 ou selon la revendication 10.
